# EUROPEAN PATENT SPECIFICATION

(11) **EP 3 277 587 B1**
(45) Date of publication and mention of the grant of the patent: **16.06.2021**
(21) Application number: 16774068.7
(22) Date of filing: 30.03.2016
(51) Int. Cl.: B64G 1/50, B64G 1/10, B64G 1/44, B64G 1/58, F28D 15/02, B64G 1/28, F28F 1/10, B64G 1/40, B64G 1/66, F28F 1/16, F28F 13/00

(54) **SATELLITE RADIATOR PANELS WITH COMBINED STIFFENER/HEAT PIPE**
SATELLITENSTRAHLERPANEELE MIT KOMBINATION AUS VERSTEIFUNG/WÄRMEROHR
PANNEAUX DE RADIATEUR POUR SATELLITE À RAIDISSEUR/CALODUC COMBINÉ

(30) Priority: 30.03.2015 US 201514673215
(43) Date of publication of application: 07.02.2018
(73) Proprietor: Worldvu Satellites Limited, Arlington VA 22209 (US)
(72) Inventor: SMITH, Alexander, D., Algonquin, IL 60102 (US); FIELD, Daniel, W., San Diego, CA 92101 (US); ASKIJIAN, Armen, Sunnyvale, CA 94086 (US); GROSSMAN, James, Belmont, CA 94002 (US)
(74) Representative: Blumbach · Zinngrebe Patentanwälte PartG mbB
(86) International application number: PCT/US2016/024916
(87) International publication number: WO 2016/160924

(56) References cited:
- EP-A1- 2 332 839
- EP-A2- 1 031 511
- EP-B1- 2 535 276
- EP-B1- 2 535 276
- WO-A2-2011/143642
- WO-A2-2013/058490
- FR-A1- 2 700 609
- JP-A- S6 296 200
- KR-A- 20110 014 856
- KR-A- 20110 014 856
- US-A- 4 706 740
- US-A- 5 735 489
- US-B2- 6 994 153

## Description

### Field of the Invention

The present invention relates to earth-orbiting communication satellites,

### Background of the Invention

Communication satellites receive and transmit radio signals from and to the surface of the Earth. Although Earth-orbiting communications satellites have been in use for many years, providing adequate cooling and heat distribution for the thermally sensitive electronics components onboard such satellites continues to be a problem.

There are two primary sources of heat with which a satellite's thermal systems must contend. One source is solar radiation. Solar radiation can be absorbed by thermal insulation shields or readily reflected away from the satellite by providing the satellite with a suitably reflective exterior surface. A second source of heat is the electronics onboard the satellite. The removal of electronics-generated heat is more problematic since such heat must be collected from various locations within the satellite, transported to a site at which it can be rejected from the satellite, and then radiated into space.

Passive thermal panels can be used to dissipate heat from satellites. In one configuration, the passive thermal panel includes a honeycomb core having heat pipes embedded therein. A heat pipe is a closed chamber, typically in the form of tube, having an internal capillary structure which is filled with a working fluid. The operating-temperature range of the satellite sets the choice of working fluid; ammonia, ethane and propylene are typical choices. Heat input (*i.e*., from heat- generating electronics) causes the working fluid to evaporate. The evaporated fluid carries the heat towards a colder heat-output section, where heat is rejected as the fluid condenses. The rejected heat is absorbed by the cooler surfaces of the heat-output section and then radiated into space. The condensate returns to the heat input section (near to heat-generating components) by capillary forces to complete the cycle.

The honeycomb core is typically a low strength, lightweight material. For this reason among any others, thin, stiff panels or "skins" are disposed on both major surfaces of the honeycomb core. The core is thus "sandwiched" between the skins. The strength of this composite is dependent largely on: (1) the outer skins and (2) an adhesive layer that bonds the honeycomb core and the skins. The panels are very expensive and labor intensive to manufacture but are required nearly everywhere that there are out-of-plane loads or modal concerns.

A second configuration of a passive thermal panel is simply a solid metallic skin. Such skins are, however, structurally inefficient for use in satellites since the skins' bending stiffness scales with the cube of its thickness. Unless expensive and heavy stiffeners are added to increase bending stiffness, such solid skins can only be used over short spans or with very little mass (*i.e.,* structures) mounted thereto. Document EP 1 031 511 A2 describes using various sets of heat pipes to ensure uniform temperature throughout an individual radiator panel. The radiators panels are not honeycomb panels, but apparently they contain internal volume; that is, they are not solid radiator panels. The heat pipes of this document are located on the inside of the radiator panels for the purpose of mechanical support. Document KR 2011 0014856 A describes a thermal control structure for a geostationary satellite. The structure is directed to a satellite having passive thermal panels that include a honeycomb. Heat pipes are presented that are disposed on the surface of a skin, the purpose of which is to facilitate heat transfer between the inside and the outside of a panel. Document US 6 994 153 B2 describes a heat discharger that is made up of a heat pipe and a heat sink that is formed separately from the heat pipe and that is bonded to the heat pipe via solder. The panels on which the heat pipes are mounted are honeycomb structures. Document EP 2 332 839 A1 describes a heat discharger that is made up of a heat pipe and a heat sink that is formed separately from the heat pipe and that is bonded to the heat pipe via solder. Document WO 2011/143642 describes a system of spacecraft radiators comprising pre-formed thermal-transfer modules joined by at least one solid-state welding process. Document EP 2 535 276 B1 describes a further space system having a radiator panel on which there is arranged at least one heat pipe for the dissipation of heat, wherein the radiator panel and the at least one heat pipe consist of materials with different coefficients of thermal expansion.

A need therefore remains for improvements in passive thermal panels for use in satellites.

### Summary of the Invention

The present invention provides an improved passive thermal system by coupling heat pipes to the surface of solid metallic radiators. In addition to providing their normal thermal function, the heat pipes serve as structural ribs to stiffen the panels. A satellite having a plurality of solid radiator panels according to the invention is disclosed in claim 1.

This approach to a passive thermal system employs the heat pipe's cross section and area moment of inertia to maximum structural effect. This is to be contrasted with the prior art, wherein the heat pipes are embedded in the honeycomb core such that they lend virtually no structural support to the panels. As a consequence of reinforcing solid metallic radiator panels with heat pipes in accordance with the present teachings, the radiator panels can be thinner than otherwise would be the case, which equates to weight savings and cost savings.

The heat pipes are structurally modified to increase their stiffness and that of the panel to which they are attached. The modification increases the out-of-plane height of the heat pipe. More particularly, such modifications substantially increase the component of the "area moment-of-inertia" along an axis that is orthogonal to the plane of the radiator panel to which the modified heat pipe is attached.

The structural modification typically has little if any impact on the heat-transfer capabilities of the heat pipe. And of course, unlike terrestrial applications, wherein fins (usually 10 or more) are used for convective cooling, in the vacuum of space such fins will only radiate, offering far less potential for cooling.

Such modified heat pipes in accordance with the invention have no more than two fins extending from its main body (*i.e.,* the bore containing portion of the heat pipe). In some embodiments, the modified heat pipe has two members extending therefrom. There would be minimal structural benefit to having three or more fins, yet there would be a weight penalty.

### Brief Description of the Drawings

**FIG. 1** depicts a satellite in accordance with the present teachings.
**FIG. 2** depicts an exploded view of portions of the satellite of FIG. 1.
**FIG.3** depicts an example of a passive thermal system for use in conjunction with the satellite of FIGs. 1 and 2, useful for understanding the present invention.
**FIG. 4** depicts a first embodiment of a passive thermal system for use in conjunction with the satellite of FIGs. 1 and 2, in accordance with the illustrative embodiment of the present invention.
**FIG. 5** depicts a second embodiment of a passive thermal system for use in conjunction with the satellite of FIGs. 1 and 2, in accordance with the illustrative embodiment of the present invention.
**FIG. 6** depicts a third embodiment of a passive thermal system for use in conjunction with the satellite of FIGs. 1 and 2, in accordance with the illustrative embodiment of the present invention.
**FIG.7** depicts another example of a passive thermal system for use in conjunction with the satellite of FIGs. 1 and 2, useful for understanding the present invention.
**FIG. 8** depicts a fifth embodiment of a passive thermal system for use in conjunction with the satellite of FIGs. 1 and 2, in accordance with the illustrative embodiment of the present invention.
**FIGs. 9A-9C** depict a beam and its ability to resist deflection as a function of the location of an applied force.

### Detailed Description

Embodiments of the present invention can be used for all types of satellites (*e.g.,* LEO, GEO, etc.). Before addressing the specifics of the instant passive thermal system, a satellite in which such a system can be used is described.

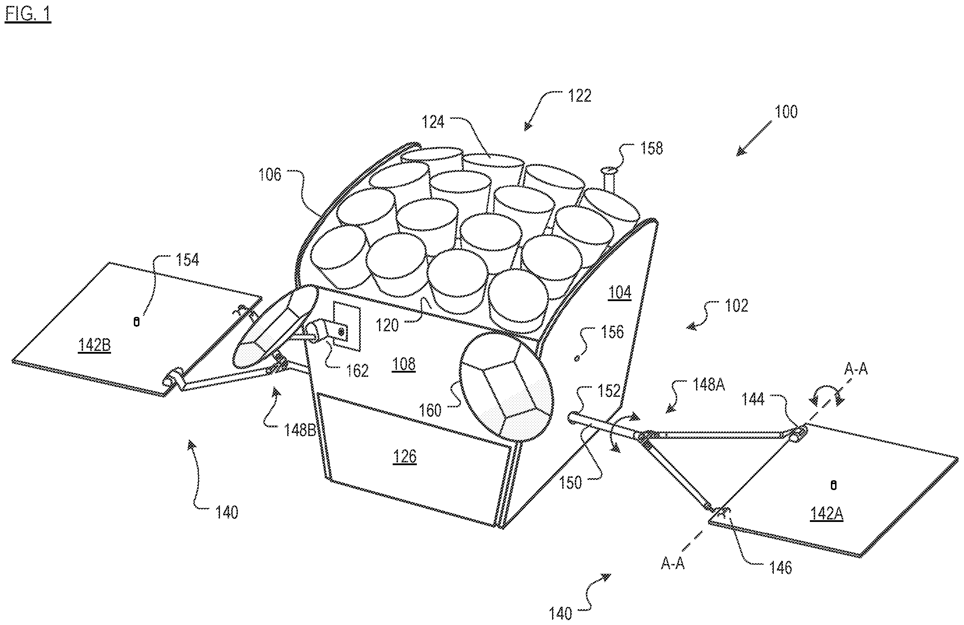

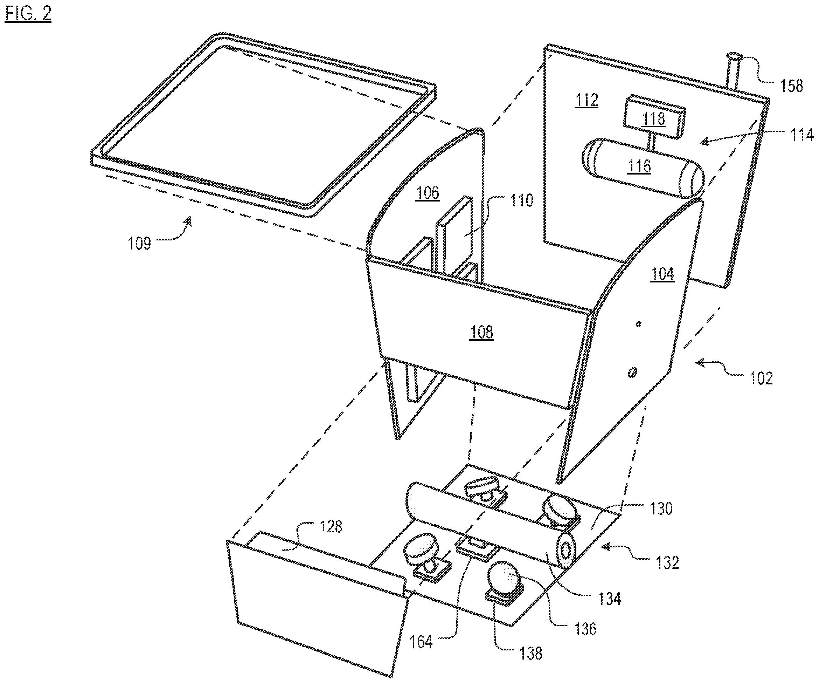

*Satellite.* FIG. 1 depicts satellite **100** in accordance with the present teachings. FIG. 2 depicts an "exploded" view of some of the salient features of satellite **100.** Referring now to both FIGs. 1 and 2, satellite **100** includes unified payload module **102,** propulsion module **114,** payload antenna module **122,** bus component module **132,** and solar-array system **140,** arranged as shown. It is to be noted that the orientation of satellite **100** in FIGs. 1 and 2 is "upside down" in the sense that in use, antennas **124,** which are facing "up" in the figures, would be facing "down" toward Earth.

Unified payload module **102** comprises panels **104, 106,** and **108.** In some embodiments, the panels are joined together using various connectors, etc., in known fashion. Brace **109** provides structural reinforcement for the connected panels.

Panels **104, 106,** and **108** serve, among any other functionality, as radiators to radiate heat from satellite **102.** In some embodiments, the panels include adaptations to facilitate heat removal. In some examples not falling within the scope of the present invention, the panels may comprise plural materials such as a core that is sandwiched by face sheets. Materials suitable for use for the panels include those typically used in the aerospace industry. For example, in some embodiments, the core comprises a lightweight aluminum honeycomb and the face sheets comprise 6061-T6 aluminum, which are bonded together, typically with an epoxy film adhesive,

Propulsion module **114** is disposed on panel **112,** which, in some examples, is constructed in like manner as panels **104, 106,** and **108** (*e.g.,* aluminum honeycomb core and aluminum facesheets, etc.). Panel **112,** which is obscured in FIG. 1, abuts panels **104** and **106** of unified payload module **102.**

Propulsion module **114** includes fuel tank **116** and propulsion control system **118.** The propulsion control system controls, using one or more valves (not depicted), release of propulsion gas through the propulsion nozzle (not depicted) that is disposed on the outward-facing surface of panel **114.** Propulsion control system is appropriately instrumented (*i.e.,* software and hardware) to respond to ground-based commands or commands generated onboard from the control processor.

Payload antenna module **122** comprises a plurality of antennas **124.** In the illustrative embodiments, sixteen antennas **124** are arranged in a 4 x 4 array. In some other embodiments, antennas **124** can be organized in a different arrangement and/or a different number of antennas can be used. Antennas **124** are supported by support web **120.** In some embodiments, the support web is a curved panel comprising carbon fiber, with a suitable number of openings (*i.e.,* sixteen in the illustrative embodiment) for receiving and supporting antennas **124.**

In some embodiments, antennas **124** transmit in the Kᵤ band, which is the 12 to 18 GHz portion of the electromagnetic spectrum. In the illustrative embodiment, antennas **124** are configured as exponential horns, which are often used for communications satellites. Well known in the art, the horn antenna transmits radio waves from (or collects them into) a waveguide, typically implemented as a short rectangular or cylindrical metal tube, which is closed at one end and flares into an open-ended horn (conical shaped in the illustrative embodiment) at the other end. The waveguide portion of each antenna **124** is obscured in FIG. 1. The closed end of each antenna **124** couples to amplifier(s) (not depicted in FIGs. 1 and 2; they are located on the interior surface of panel **104** or **108**).

Bus component module **132** is disposed on panel **130,** which attaches to the bottom (from the perspective of FIGs. 1 and 2) of the unified payload module **102.** In some examples, panel **130** can be constructed in like manner as panels **104, 106,** and **108** (*e.g*., aluminum honeycomb core and aluminum facesheets, *etc.*). In some examples, panel **130** does not include any specific adaptations for heat removal.

Module **132** includes main solar-array motor **134,** four reaction wheels **136,** and main control processor **164.** The reaction wheels enable satellite **100** to rotate in space without using propellant, via conservation of angular momentum. Each reaction wheel **136,** which includes a centrifugal mass (not depicted), is driven by an associated drive motor (and control electronics) **138.** As will be appreciated by those skilled in the art, only three reaction wheels **136** are required to rotate satellite **100** in the x, y, and z directions. The fourth reaction wheel serves as a spare. Such reaction wheels are typically used for this purpose in satellites.

Main control processor **164** processes commands received from the ground and performs, autonomously, many of the functions of satellite **100,** including without limitation, attitude pointing control, propulsion control, and power system control.

Solar-array system **140** includes solar panels **142A** and **142B** and respective y-bars **148A** and **148B.** Each solar panel comprises a plurality of solar cells (not depicted; they are disposed on the obscured side of solar panels **142A** and **142B)** that convert sunlight into electrical energy in known fashion. Each of the solar panels includes motor **144** and passive rotary bearing **146;** one of the y-bar attaches to each solar panel at motor **144** and bearing **146.** Motors **144** enable each of the solar panels to at least partially rotate about axis **A-A.** This facilitates deploying solar panel **142A** from its stowed position parallel to and against panel **104** and deploying solar panel **142B** from its stowed position parallel to and against panel **106.** The motors **144** also function to appropriately angle panels **142A** and **142B** for optimal sun exposure via the aforementioned rotation about axis **A-A.**

Member **150** of each y-bar **148A** and **148B** extends through opening **152** in respective panels **104** and **106.** Within unified payload module **102,** members **150** connect to main solar-array motor **134,** previously referenced in conjunction with bus component module **132.** The main solar-array motor is capable of at least partially rotating each member **150** about its axis, as shown. This is for the purpose of angling solar panels **142A** and **142B** for optimal sun exposure. In some embodiments, the members **150** can be rotated independently of one another; in some other embodiments, members **150** rotate together. Lock-and-release member **154** is used to couple and release solar panel **142A** to side panel **104** and solar panel **142B** to side panel **106.** The lock-and-release member couples to opening **156** in side panels **104** and **106.**

Satellite **100** also includes panel **126,** which fits "below" (from the perspective of FIGs. 1 and 2) panel **108** of unified payload module **102.** Panel **108** is a sheet of aerospace grade material (*e.g.,* 6061-T6 aluminum, etc.) Battery module **128** is disposed on the interior-facing surface of panel **126.** The battery module supplies power for various energy consumers onboard satellite **100.** Battery module **128** is recharged from electricity that is generated via solar panels **142A** and **142B;** the panels and module **128** are electrically coupled for this purpose (the electrical path between solar panels **142A/B** and battery module **128** is not depicted in FIGs, 1 and 2).

Satellite **100** further includes omni-directional antenna **158** for telemetry and ground-based command and control.

Disposed on panel **108** are two "gateway" antennas **160.** The gateway antennas send and receive user data to gateway stations on Earth. The gateway stations are in communication with the Internet. Antennas **160** are coupled to panel **108** by movable mounts **162,** which enable the antennas to be moved along two axes for optimum positioning with ground-based antennas. Antennas **160** typically transmit and receive in the Kₐ band, which covers frequencies in the range of 26.5 to 40 GHz.

Convertor modules **110,** which are disposed on interior-facing surface of panel **106,** convert between Kₐ radio frequencies and Kᵤ radio frequencies. For example, convertor modules **110** convert the Kₐ band uplink signals from gateway antennas **160** to Kᵤ band signals for downlink via antennas **124.** Convertor modules **110** also convert in the reverse direction; that is, Kᵤ to Kₐ.

In operation of satellite **100,** data flows as follows for a data request:
- (obtain data): requested data is obtained from the Internet at a gateway station;
- (uplink): a data signal is transmitted (Kₐ band) via large, ground-based antennas to the satellite's gateway antennas **160;**
- (payload): the data signal is amplified, routed to convertor modules **110** for conversion to downlink (Kᵤ) band, and then amplified again;
- the payload signal is routed to payload antennas **124;**
- (downlink): antennas **124** transmit the amplified, frequency-converted signal to the user's terminal.
When a user transmits (rather than requests) data, such as an e-mail, the signal follows the same path but in the reverse direction.

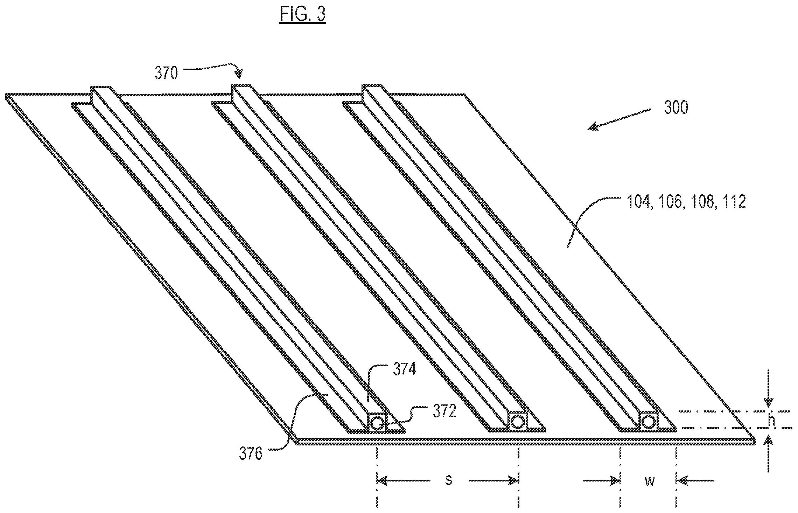

*Passive Thermal System.* FIG. 3 depicts passive thermal system **300,** useful for understanding the invention, which includes a solid radiator panel, such as panels **104, 106, 108,** or **112,** and one or more heat pipes **370.** The heat pipes are attached to the panel via an epoxy film adhesive, for example, or other suitable bonding material known to those skilled in the art. Alternatively, heat pipes **370** can be bolted to the panels via standard fasteners in conjunction with thermal gasket material, which is compressed between heat pipes **370** and the panel.

The solid radiator panel is typically formed of a metal, such as aluminum. In the illustrative embodiment, passive thermal system **300** includes three heat pipes **370.** The heat pipe includes main body **374** and flanges **376.** Main body **374** includes bore **372.** The bore extends the full length of main body **374** and contains heat-pipe fluid. The heat pipes are typically formed of aluminum,

Heat pipes **370** are conventional heat pipes. In the present context, a **"conventional heat pipe"** is defined for use in this disclosure and the appended claims as a heat pipe having no structural features external to main body **374,** other than flanges **376** or other arrangements by which the heat pipe is attached to a surface, or caps that cap the ends of the heat pipe.

Two important considerations in the design of thin-walled structures, such as satellite **100,** are the buckling stability and panel stiffness/vibrational frequency of the walls - in this context- the radiator panels.

The radiator panels can be subjected to normal compressive and shearing loads. Under certain conditions, these loads can cause a panel to buckle. The buckling load of a standard solid radiator panel depends on its thickness; in particular, the thicker the plate (for a given material), the higher the critical buckling load.

The presence of heat pipes **370** on a solid radiator panel, in accordance with the present invention, provides a second variable that affects buckling load. As more heat pipes are added to the radiator panel, the spacing, **s,** between the heat pipes naturally decreases. For passive thermal system **300,** the unsupported width of the solid radiator panels (*i.e.,* the center-to-center spacing, s, between adjacent heat pipes **370)** drives the buckling mode and associated eigenvalue, As a consequence, adding heat pipes 370 will provide additional buckling resistance to a solid radiator panel. Additionally, increasing width, **w,** of flange **376** will provide some additional buckling resistance and increase the critical buckling load. Although three heat pipes are depicted in the illustrative embodiment, more or fewer heat pipes can be used as is appropriate for the size and thickness of the radiator panel and the expected loads.

In the context of forces and deflections experienced by the radiator panels of satellite **100,** it is panel stiffness, as opposed to buckling resistance, which will be the controlling design factor. With continued reference to **FIG.** 3, consider the tendency of passive thermal system **300** to bend along an axis that is normal to (but in-plane with) heat pipes **370.** The stiffer the heat pipes, the greater the resistance to bending exhibited by passive thermal system **300.**

In accordance with some embodiments of the present teachings, passive thermal system includes heat pipes that include a physical adaptation for increasing the stiffness of the heat pipes and the combined heat pipes/radiator panel beyond any benefit provided to such a panel by unmodified heat pipes, such as heat pipes **370.**

The stiffness of the heat pipes, and hence passive thermal system **300,** can be increased by making the heat pipes taller out-of-plane. This principle is illustrated via FIGs, 9A through 9C.

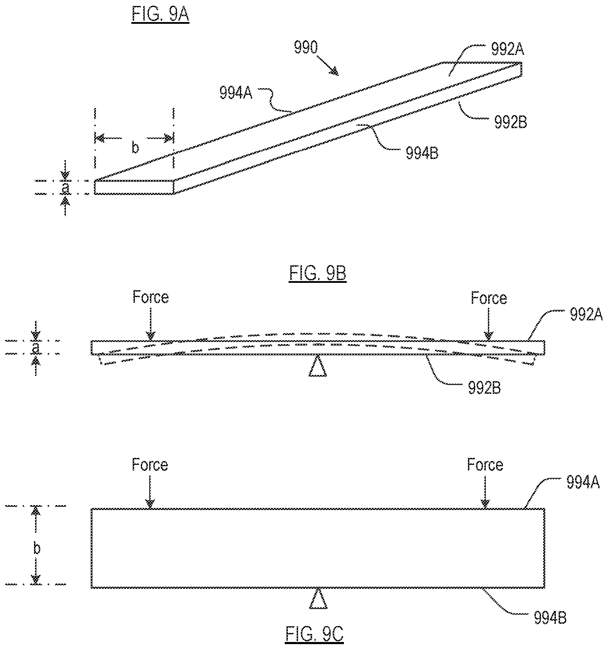

FIG. 9A depicts a perspective view of a beam **990.** The beam has the indicated dimensions, wherein the dimension **"b"** is six times larger than the dimension **"a";** that is, b= **6a.** FIG. 9B depicts beam **990** oriented such that it is supported at the midpoint of major surface **992B.** In this orientation, the "height" of beam 990 is "a". FIG. 9C depicts beam **990** oriented such that it is supported at the midpoint of edge **992B.** In this orientation, the "height" of beam **990** is "b" or 6 x a.

If force is applied to surface **992A** as depicted in FIG. 9B, beam **990** will bend in the manner shown far more readily than if the same amount of force were applied to surface **994A** as depicted in FIG. 9C. It will be appreciated from these figures that, with height defined as shown and force applied as shown, increasing the height of the beam greatly increases its stiffness to bending in the indicated direction.

A heat pipe that is modified with the explicit intent of increasing its stiffness without regard to any thermal considerations concerning the heat pipe is referred to in this disclosure and the appended claims as a **"structural heat pipe".** A **"structural heat pipe"** is defined for use in this disclosure and the appended claims as a heat pipe that is structurally modified to *substantially* increase the component of the "area moment-of-inertia" along an axis that is orthogonal to the plane of the radiator panel. In this context, **"substantially increase"** means to increase by 50% or more. As is relevant to embodiments of the invention, increasing the component of the "area moment-of-inertia" along an axis that is orthogonal to the plane of the radiator panel means increasing the height of heat pipe, wherein "height" is referenced with respect to the radiator panel to which the structural heat pipe is coupled.

Embodiments of the present invention do not contemplate using a heat pipe that is larger than what is required for the calculated thermal load. In other words, embodiments of the invention do not contemplate, and explicitly exclude, using an oversized (based on thermal requirements) heat pipe as a way to increase the aforementioned area moment-of-inertia. Doing so would add too much mass.

Rather, in accordance with the present teachings, the area moment-of-inertia along an axis that is orthogonal to the plane of the radiator panel heat pipe is increased via structural modifications that typically do not impact the heat-carrying capacity of the heat pipe (*e.g.,* no increase in bore diameter, no structural alterations that result in an increase in the quantity of heat pipe fluid, *etc.*) or would have, at best, minimal impact on the heat transfer capabilities of the heat pipe. In this context, "minimal impact" means "less than 5 percent".

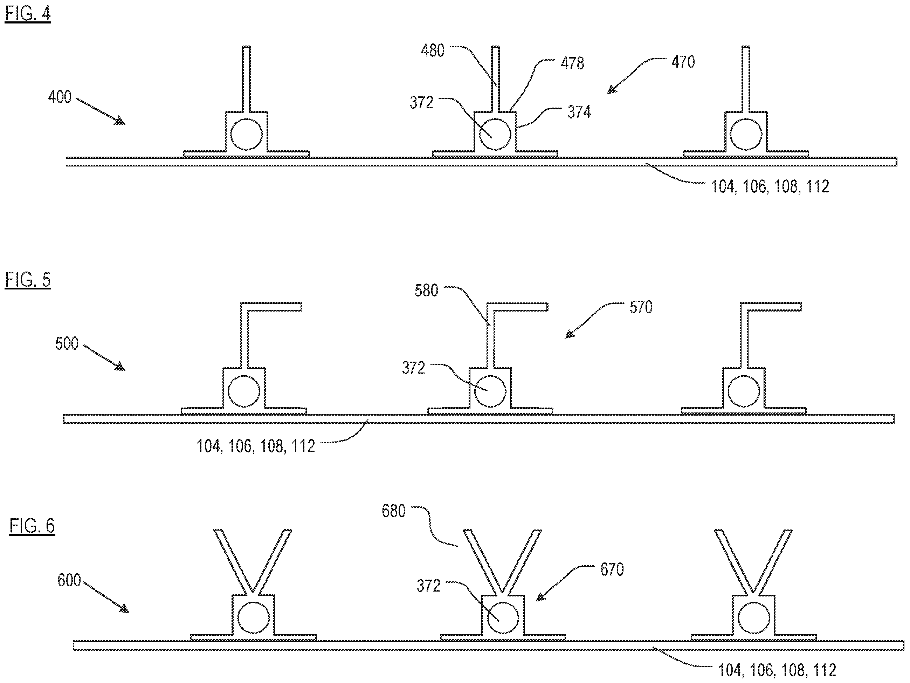

FIGs. 4 through 8 depict, via an end view, passive thermal systems comprising structural heat pipes; that is, heat pipes that are structurally modified to increase their stiffness and that of the attached radiator. It is to be understood that the structures shown in FIGs. 4 through 8 extend "into the page." In other words, if these Figures were presented via perspective views like FIG. 3, the structural heat pipes would be seen to extend longitudinally like the conventional heat pipes shown in FIG. 3.

FIG. 4 depicts passive thermal system **400** comprising a solid radiator panel, such as panels **104, 106, 108,** and **112** and structural heat pipes **470.** Each structural heat pipe **470** includes a straight vertical fin **480** that extends away from the solid radiator panel and from a position proximal to top **478** of main body **374** of structural heat pipe **470.** As used herein, the phrase "top of the main body of the structural heat pipe" means the location on the portion of the heat pipe that contains bore **372** that is furthest from the radiator panel. So, for example, if the **FIG.** 4 were inverted such that heat pipes **470** were facing "downward," the "top of the main body of the structural heat pipe" is the same location on heat pipes **470** as in FIG. 4.

Such a fin is not present on a conventional heat pipe. The vertical fin increases the out-of-plane height of heat pipe **470** relative to the unmodified heat pipe **370.** This increase in out-of-plane height increases the "area moment-of-inertia" of the heat pipes **470** and the heat pipe/panel assembly (*i.e*., passive thermal system **400**). The increase in area moment of inertia equates to an increase in stiffness.

In the embodiment depicted in FIG. 4, fin **480** is orthogonal to the radiator panel. In some other embodiments, fin **480** is not orthogonal to the radiator panel. The latter case might be dictated, for example, in a situation in which there insufficient clearance for an orthogonally oriented fin.

In some further embodiments, a passive thermal system in accordance with the present teachings has two straight vertical fins (each like fin **480**) that extend away from the solid radiator panel and from a position proximal to top **478** of main body **374** of structural heat pipe **470.** In preferred embodiments, both fins are orthogonal to the radiator panel. However, if space or other constraints dictate otherwise, the fins can be oriented non-orthogonal to the radiator panel.

FIG. 5 depicts passive thermal system **500** comprising a solid radiator panel, such as panels **104, 106, 108,** and **112** and structural heat pipes **570.** Each structural heat pipe **570** includes L-shaped fin **580.** The L-shaped fin increases the out-of-plane height of heat pipe **570** relative to the unmodified heat pipe **370,** which, as previously noted, increases the area moment of inertia of the heat pipes **570** and the heat pipe/panel assembly (i.e., passive thermal system **500**). The L-shaped fin requires less out-of-plane clearance than a fin that is straight and has the same amount of mass and the same fin thickness. The L-shaped fin also provides more lateral stability to heat pipes **570,** which might be required in some embodiments.

FIG. 6 depicts passive thermal system **600** comprising a solid radiator panel, such as panels **104, 106, 108,** and **112** and structural heat pipes **670.** Each structural heat pipe **670** includes double fin **680.** The double fin increases the out-of-plane height of heat pipes **670** relative to the unmodified heat pipe **370,** and, hence, increases the area moment of inertia of the heat pipes **670** and the heat pipe/panel assembly (*i.e.,* passive thermal system **600**). Like L-shaped fin **580,** double fin **680** also improves the lateral stability of structural heat pipe **670,** but is typically preferred to L-shaped fin **580** due to the lack of symmetry of the L-shaped fin.

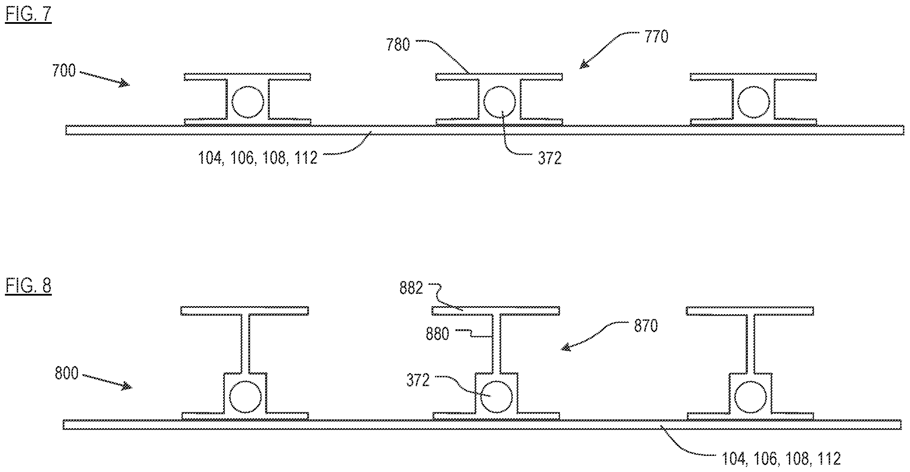

FIG. 7 depicts passive thermal system **700** comprising a solid radiator panel, such as panels **104, 106, 108,** and **112** and structural heat pipes **770,** useful for understanding the invention. Each structural heat pipe **770** includes a horizontal plate **780,** providing a classic "I-beam" configuration. Although structural heat pipe **770** does not possess the out-of-plane height of, for example, structural heat pipe **470,** the I-beam configuration does improve stiffness relative to a conventional heat pipe having the same size.

FIG. 8 depicts passive thermal system **800** comprising a solid radiator panel, such as panels **104, 106, 108,** and **112** and structural heat pipes **870.** Each structural heat pipe **870** includes vertical fin **880** and horizontal plate **882,** providing a "tall" I-beam configuration. The additional out-of-plane height of structural heat pipe **870** makes it stiffer than structural heat pipe **770** and, of course, stiffer than unmodified heat pipe **370.**

In structural heat pipes **470, 570, 670, 770** and **870,** the main body of the heat pipe is structurally modified. In some other embodiments, rather than altering the main body of the heat pipe, a height-increasing feature is coupled to the main body, such as with appropriate fasteners or adhesive.

In the illustrative embodiments, heat pipes **370** and structural heat pipes **470** through **870** are depicted as being straight and arranged parallel to one another on a surface of the radiator panel. In some other embodiments, heat pipes **370** and structural heat pipes in accordance with the present teachings are:
(i) not straight (they are curved, etc.); or
(ii) straight but not parallel with respect to one another on the surface of the radiator panel; or
(iii) not straight and not parallel with respect to one another on the surface of the radiator.

In light of the present disclosure and without deviating from the present teachings, those skilled in the art will be able to design and implement additional configurations of structural heat pipes having increased stiffness and passive thermal systems incorporating same.

It is to be understood that the disclosure describes a few embodiments and that many variations of the invention can easily be devised by those skilled in the art after reading this disclosure and that the scope of the present invention is to be determined by the following claims.

## Claims

1. A satellite (100) having a plurality of solid radiator panels, each of the radiator panel is a solid metallic skin, for radiating, to an external environment, heat that is generated by electronics contained in the satellite, wherein the satellite (100) includes a passive thermal system (300), and wherein the passive thermal system comprises:
at least one of the solid radiator panels (104, 106, 108, 112); and
a plurality of structural heat pipes (370, 470, 570, 670, 770, 870) disposed and extending longitudinally on the at least one solid radiator panel (104, 106, 108, 112),
wherein each said plurality of structural heat pipes (370, 470, 570, 670, 770, 870) has a main body and a top portion extended away from the radiator panel (104, 106, 108, 112),
**characterized in that** each of said plurality of structural heat pipes (370, 470, 570, 670, 770, 870) has no more than two fins, each of which extends away from the radiator panel (104, 106, 108, 112) from a position proximal to the top portion of the main body of the structural heat pipe (370, 470, 570, 670, 770, 870),
wherein each said fin is a structural modification so as to increase the component of the area moment-of-inertia along an axis that is orthogonal to the plane of the solid radiator panel and
wherein there are no other structural reinforcements disposed on the surface of the solid radiator panel (104, 106, 108, 112).

2. The satellite of claim 1 wherein the structural modification comprises two straight fins (680) that extend away from the solid radiator panel (104, 106, 108, 112) from a position proximal to a top of a main body of the structural heat pipe (670).

3. The satellite of claim 1 wherein the structural modification comprises one straight fin (480, 580).

4. The satellite of claim 1 wherein the structural modification comprises two fins (680), and wherein the two fins (680) collectively form a v-shape, the v-shape defining an acute angle.

5. The satellite of claim 1 wherein the structural modification comprises an L-shape member (580), the L-shape member (580) having a first portion extending away from the solid radiator panel (104, 106, 108, 112) and from a position proximal to the top of the main body of the structural heat pipe (570).

6. The satellite of claim 5 the first portion of the L-shape member (580) is oriented orthogonally with respect to the solid radiator panel (104, 106, 108, 112).

7. The satellite of claim 5 wherein a second portion of the L-shape member (580) is oriented in parallel with respect to the solid radiator panel (104, 106, 108, 112).

8. The satellite of claim 1 wherein the structural modification comprises a t-shape member (780) having a first portion extending away from the solid radiator panel and from a position proximal to the top of the main body of the structural heat pipe.

9. The satellite of claim 8 wherein the first portion of the t-shape member (780) is oriented orthogonally with respect to the solid radiator panel (104, 106, 108, 112).

10. The satellite of claim 9 wherein a second portion of the t-shape member (780) is oriented in parallel with respect to the solid radiator panel (104, 106, 108, 112).

11. The satellite of claim 1 wherein there are two structural heat pipes disposed on the surface of the radiator panel (104, 106, 108, 112), wherein the two structural heat pipes (370, 470, 570, 670, 770, 870) are not parallel with respect to one another.

12. The satellite of claim 1 wherein a structural heat pipe (370, 470, 570, 670, 770, 870) is not straight.

13. The satellite of claim 3 wherein the one straight fin (480, 580) extends from the top of the main body of the structural heat pipe and aligns with a midpoint between a left side and a right side thereof.

14. The satellite of claim 13 wherein the fin (480) is orthogonal to the solid radiator panel (104, 106, 108, 112).

15. The satellite of claim 5 wherein the first portion aligns with a midpoint between a left side and a right side of the main body of the structural heat pipe (370, 470, 570, 670, 770, 870).

16. The satellite of claim 8 wherein the first portion aligns with a midpoint between a left side and a right side of the main body of the structural heat pipe (370, 470, 570, 670, 770, 870) .

## Patentansprüche

1. Satellit (100), der eine Mehrzahl von stabilen Radiatorpanelen umfasst, wobei die Radiatorpanele jeweils eine stabile metallische Verkleidung darstellen, um Wärme, die von der im Satelliten enthaltenen Elektronik erzeugt wird, an eine Außenumgebung abzustrahlen, wobei der Satellit (100) ein passives thermisches System (300) umfasst und wobei das passive thermische System umfasst:
mindestens eines der stabilen Radiatorpanele (104, 106, 108, 112), und
eine Mehrzahl von strukturgebenden Wärmerohren (370, 470, 570, 670, 770, 870), die an dem mindestens einen stabilen Radiatorpanel (104, 106, 108, 112) angeordnet sind und sich auf diesem in Längsrichtung erstrecken,
wobei die mehreren strukturgebenden Wärmerohre (370, 470, 570, 670, 770, 870) jeweils einen Grundkörper und einen oberen Abschnitt aufweisen, der sich von dem Radiatorpanel (104, 106, 108, 112) hinweg erstreckt,
**dadurch gekennzeichnet, dass**
die mehreren strukturgebenden Wärmerohre (370, 470, 570, 670, 770, 870) jeweils nicht mehr als zwei Rippen aufweisen, die sich jeweils von einer Stelle proximal zu dem oberen Abschnitt des Grundkörpers des strukturgebenden Wärmerohrs (370, 470, 570, 670, 770, 870) aus von dem Radiatorpanel (104, 106, 108, 112) hinweg erstrecken,
wobei die Rippen jeweils eine strukturgebende Modifikation dahingehend darstellen, als sie die Komponente des Fiächenträgheitsmoments entlang einer Achse orthogonal zu der Ebene der stabilen Radiatorpanel erhöhen, und
wobei auf der Oberfläche der stabilen Radiatorpanele (104, 106, 108, 112) keine anderen strukturgebenden Verstärkungen angeordnet sind.

2. Satellit nach Anspruch 1, wobei die strukturgebende Modifikation zwei gerade Rippen (680) umfasst, die sich von dem stabilen Radiatorpanel (104, 106, 108, 112) hinweg von einer Stelle proximal zu einer Oberseite eines Grundkörpers des strukturgebenden Wärmerohrs (670) ausgehend erstrecken.

3. Satellit nach Anspruch 1, wobei die strukturgebende Modifikation eine gerade Rippe (480, 580) umfasst.

4. Satellit nach Anspruch 1, wobei die strukturgebende Modifikation zwei Rippen (680) umfasst und wobei die beiden Rippen (680) zusammen eine V-Form bilden, wobei die V-Form einen spitzen Winkel bildet.

5. Satellit nach Anspruch 1, wobei die strukturgebende Modifikation ein L-förmiges Element (580) umfasst, wobei das L-förmige Element (580) einen ersten Abschnitt aufweist, der sich von dem stabilen Radiatorpanel (104, 106, 108, 112) hinweg und von einer Stelle proximal zur Oberseite des Grundkörpers des strukturgebenden Wärmerohrs (570) ausgehend erstreckt.

6. Satellit nach Anspruch 5, wobei der erste Abschnitt des L-förmigen Elements (580) orthogonal in Bezug auf das stabile Radiatorpanel (104, 106, 108, 112) gerichtet ist.

7. Satellit nach Anspruch 5, wobei ein zweiter Abschnitt des L-förmigen Elements (580) parallel in Bezug auf das stabile Radiatorpanel (104, 106, 108, 112) gerichtet ist.

8. Satellit nach Anspruch 1, wobei die strukturgebende Modifikation ein T-förmiges Element (780) umfasst, mit einem ersten Abschnitt, der sich von einer Stelle proximal zur Oberseite des Grundkörpers des strukturgebenden Wärmerohrs hinweg erstreckt.

9. Satellit nach Anspruch 8, wobei der erste Abschnitt des T-förmigen Elements (780) orthogonal in Bezug auf das stabile Radiatorpanel (104, 106, 108, 112) gerichtet ist.

10. Satellit nach Anspruch 9, wobei ein zweiter Abschnitt des T-förmigen Elements (780) parallel in Bezug auf das stabile Radiatorpanel (104, 106, 108, 112) gerichtet ist.

11. Satellit nach Anspruch 1, wobei auf der Oberfläche des Radiatorpanels (104, 106, 108, 112) zwei strukturgebende Wärmerohre angeordnet sind, wobei die beiden strukturgebenden Wärmerohre (370, 470, 570, 670, 770, 870) nicht parallel zueinander angeordnet sind.

12. Satellit nach Anspruch 1, wobei ein strukturgebendes Wärmerohr (370, 470, 570, 670, 770, 870) nicht geradlinig ausgebildet ist.

13. Satellit nach Anspruch 3, wobei sich die eine gerade Rippe (480, 580) von der Oberseite des Grundkörpers des strukturgebenden Wärmerohrs aus erstreckt und zu einem Mittelpunkt zwischen einer linken Seite und einer rechten Seite desselben ausgerichtet ist.

14. Satellit nach Anspruch 13, wobei die Rippe (480) orthogonal zu dem stabilen Radiatorpanel (104, 106, 108, 112) angeordnet ist.

15. Satellit nach Anspruch 5, wobei der erste Abschnitt zu einem Mittelpunkt zwischen einer linken Seite und einer rechten Seite des Grundkörpers des strukturgebenden Wärmerohrs (370, 470, 570, 670, 770, 870) ausgerichtet ist.

16. Satellit nach Anspruch 8, wobei der erste Abschnitt zu einem Mittelpunkt zwischen einer linken Seite und einer rechten Seite des Grundkörpers des strukturgebenden Wärmerohrs (370, 470, 570, 670, 770, 870) ausgerichtet ist.

## Revendications

1. Satellite (100) possédant une pluralité de panneaux rayonnants pleins, chacun des panneaux rayonnants étant un revêtement métallique plein, destiné à rayonner, vers un environnement externe, la chaleur qui est générée par l'électronique contenue dans le satellite, où le satellite (100) comprend un système thermique passif (300), et où le système thermique passif comprend :
au moins l'un des panneaux rayonnants pleins (104, 106, 108, 112); et
une pluralité de conduits de chaleur structurels (370, 470, 570, 670, 770, 870) disposés et s'étendant longitudinalement sur l'au moins un panneau rayonnant plein (104, 106, 108, 112),
où chacun de ladite pluralité de conduits de chaleur structurels (370, 470, 570, 670, 770, 870) possède un corps principal et une partie supérieure qui s'étend à l'écart du panneau rayonnant (104, 106, 108, 112),
**caractérisé en ce que** chacun de ladite pluralité de conduits de chaleur structurels (370, 470, 570, 670, 770, 870) possède pas plus de deux ailettes, qui s'étendent chacune à l'écart du panneau rayonnant (104, 106, 108, 112) depuis un emplacement proximal par rapport à la partie supérieure du corps principal du conduit de chaleur structurel (370, 470, 570, 670, 770, 870),
où chacune desdites ailettes est une modification structurelle de façon à augmenter la composante de moment d'inertie de surface le long d'un axe orthogonal au plan du panneau rayonnant plein, et
où il n'y a aucun autre renfort structurel disposé sur la surface du panneau rayonnant plein (104, 106, 108, 112).

2. Satellite selon la revendication 1, où la modification structurelle comprend deux ailettes droites (680) qui s'étendent à l'écart du panneau rayonnant plein (104, 106, 108, 112) depuis un emplacement proximal par rapport à une partie supérieure d'un corps principal du conduit de chaleur structurel (670).

3. Satellite selon la revendication 1, où la modification structurelle comprend une ailette droite (480, 580).

4. Satellite selon la revendication 1, où la modification structurelle comprend deux ailettes (680), et où les deux ailettes (680) forment collectivement une forme de V, la forme de V définissant un angle aigu.

5. Satellite selon la revendication 1, où la modification structurelle comprend un organe en forme de L (580), l'organe en forme de L (580) ayant une première partie s'étendant à l'écart du panneau rayonnant plein (104, 106, 108, 112) et depuis un emplacement proximal par rapport à la partie supérieure du corps principal du conduit de chaleur structurel (570).

6. Satellite selon la revendication 5, où la première partie de l'organe en forme de L (580) est orientée de manière orthogonale par rapport au panneau rayonnant plein (104, 106, 108, 112).

7. Satellite selon la revendication 5, où une seconde partie de l'organe en forme de L (580) est orientée en parallèle par rapport au panneau rayonnant plein (104, 106, 108, 112).

8. Satellite selon la revendication 1, où la modification structurelle comprend un organe en forme de T (780) possédant une première partie s'étendant à l'écart du panneau rayonnant plein et depuis un emplacement proximal par rapport à la partie supérieure du corps principal du conduit de chaleur structurel.

9. Satellite selon la revendication 8, où la première partie de l'organe en forme de T (780) est orientée de manière orthogonale par rapport au panneau rayonnant plein (104, 106, 108, 112).

10. Satellite selon la revendication 9, où une seconde partie de l'organe en forme de T (780) est orientée en parallèle par rapport au panneau rayonnant plein (104, 106, 108, 112).

11. Satellite selon la revendication 1, où il existe deux conduits de chaleur structurels disposés sur la surface du panneau rayonnant (104, 106, 108, 112), où les deux conduits de chaleur structurels (370, 470, 570, 670, 770, 870) ne sont pas parallèles l'un par rapport à l'autre.

12. Satellite selon la revendication 1, où un conduit de chaleur structurel (370, 470, 570, 670, 770, 870) n'est pas droit.

13. Satellite selon la revendication 3, où ladite une ailette droite (480, 580) s'étend depuis la partie supérieure du corps principal du conduit de chaleur structurel et s'aligne avec un point intermédiaire situé entre un côté gauche et un côté droit de celui-ci.

14. Satellite selon la revendication 13, où l'ailette (480) est orthogonale par rapport au panneau rayonnant plein (104, 106, 108, 112).

15. Satellite selon la revendication 5, où la première partie s'aligne avec un point intermédiaire situé entre un côté gauche et un côté droit du corps principal du conduit de chaleur structurel (370, 470, 570, 670, 770, 870).

16. Satellite selon la revendication 8, où la première partie s'aligne avec un point intermédiaire situé entre un côté gauche et un côté droit du corps principal du conduit de chaleur structurel (370, 470, 570, 670, 770, 870) .
